# DEMANDE DE BREVET EUROPEEN

(11) **EP 4 575 455 A1**
(43) Date de publication de la demande: **25.06.2025**
(21) Numéro de dépôt: 24223090.2
(22) Date de dépôt: 23.12.2024
(51) Int. Cl.: G01N 3/20

(54) **EPROUVETTE DE CARACTERISATION ET PROCEDE D'ESSAI MECANIQUE ASSOCIE**

(30) Priorité: 22.12.2023 FR 2315123
(71) Demandeur: Setforge, 42152 L'Horme (FR); Ecole Nationale Supérieure d'Arts et Métiers (ENSAM), 75013 Paris (FR)
(72) Inventeur: HAGUENAUER, Victor, 42152 L'HORME (FR); BIGOT, Régis, 57070 METZ (FR); BECKER, Eric, 57070 METZ (FR)
(74) Mandataire: Cabinet Boettcher

(57) **Abrégé**

L'invention concerne une éprouvette de caractérisation. Selon l'invention, l'éprouvette est conformée extérieurement en une forme oblongue et est creusée intérieurement par un orifice (4) de forme oblongue.

L'invention concerne également un procédé d'essai mécanique ayant recours à une telle éprouvette.

## Description

La présente invention concerne une éprouvette de caractérisation.

L'invention concerne également un procédé d'essai mécanique sur une telle éprouvette.

### ARRIERE PLAN DE L'INVENTION

Les matériaux composites sont utilisés dans de nombreuses applications et par exemple dans le domaine aéronautique (aubes, carters, bielles ...) .

De telles pièces composites sont généralement soumises à des charges et des contraintes importantes. En conséquence, il convient de les dimensionner afin de s'assurer de leur bon fonctionnement dans le temps et l'application visée. Un tel dimensionnement nécessite une connaissance pointue du matériau utilisé.

A cet effet, il est connu des méthodes pour caractériser le comportement de matériaux composites.

Usuellement de telles méthodes consistent à réaliser de multiples essais sur de multiples éprouvettes de caractérisation, les éprouvettes étant dans un matériau dont on souhaite valider le comportement. Les résultats des différents essais sont alors comparés et analysés pour en déduire une ou des caractéristiques mécaniques du matériau.

Ce type de méthode s'avère donc relativement fastidieuses.

### OBJET DE L'INVENTION

L'invention a notamment pour but d'obvier au moins en partie à l'inconvénient précité.

### RESUME DE L'INVENTION

A cet effet, on prévoit, une éprouvette de caractérisation.

Selon l'invention, l'éprouvette est conformée extérieurement en une forme oblongue et est creusée intérieurement par un orifice de forme oblongue.

De façon étonnante, l'inventeur a pu constater que la forme particulière de l'éprouvette permettait d'obtenir des résultats de caractérisation de manière plus efficace. En particulier, avec une telle forme d'éprouvette, les inventeurs ont pu constater qu'il était possible de caractériser plusieurs caractéristiques mécaniques avec un seul type d'essai mécanique.

Optionnellement, l'orifice est transversant et s'étend selon une direction axiale, l'éprouvette étant conformé en un anneau oblong fermé.

Optionnellement, une épaisseur de l'éprouvette est constante sur tout le tour de l'éprouvette.

Optionnellement, l'éprouvette est symétrique selon au moins un axe de symétrie.

Optionnellement, l'éprouvette a une épaisseur supérieure à 5 millimètres.

Optionnellement, l'étiquette est en matériau composite.

L'invention concerne également un procédé d'essai mécanique sur une éprouvette telle que précitée, dans lequel l'éprouvette est soumise à un essai de flexion quatre points.

Optionnellement, quatre arbres viennent en contact avec l'éprouvette pendant l'essai, l'éprouvette reposant sur deux premiers arbres par une face inférieure de l'éprouvette et deux deuxièmes arbres venant appuyer sur une face supérieure de l'éprouvette.

Optionnellement, chaque arbre appuyant sur la face supérieure de l'éprouvette est aligné avec l'un des arbres appuyant sur la face inférieure de l'éprouvette.

Optionnellement, un milieu de la face inférieure de l'éprouvette repose sur les deux premiers arbres et dans lequel les deux deuxièmes arbres appuient sur une face supérieure de l'éprouvette.

L'invention concerne également un procédé d'essai mécanique sur une éprouvette, l'éprouvette étant conformée extérieurement en une forme oblongue et étant creusée intérieurement par un orifice de forme oblongue, l'éprouvette étant soumise à un essai de flexion quatre points, quatre arbres venant en contact avec l'éprouvette pendant l'essai, l'éprouvette reposant sur deux premiers arbres par une face inférieure de l'éprouvette et deux deuxièmes arbres venant appuyer sur une face supérieure de l'éprouvette, dans lequel chaque arbre appuyant sur la face supérieure de l'éprouvette est aligné avec l'un des arbres appuyant sur la face inférieure de l'éprouvette.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue en trois dimensions d'une éprouvette de caractérisation selon un mode de réalisation particulier de l'invention ;
[Fig. 2] la figure 2 est une vue en coupe transversale de l'éprouvette représentée à la figure 1 ;
[Fig. 3] la figure 3 est un schéma symbolisant les différentes étapes de caractérisation d'un matériau à partir de l'éprouvette représentée à la figure 1 ;
[Fig. 4] la figure 4 est une vue schématique de l'éprouvette représentée à la figure 1 lors d'un essai mécanique de ladite éprouvette.

### DESCRIPTION DETAILLEE DE L'INVENTION

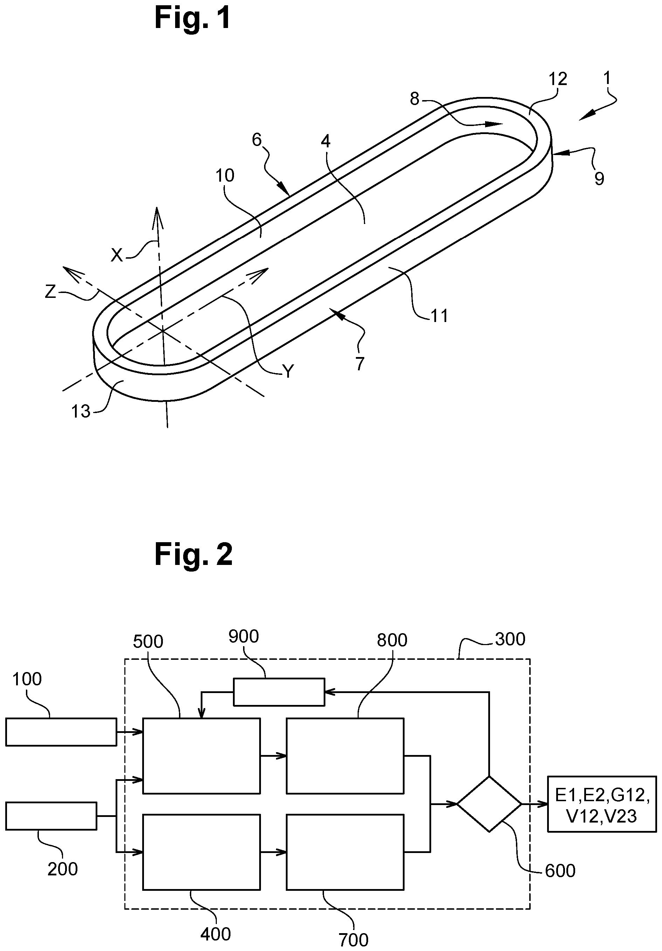

En référence à la figure 1 et à la figure 2, l'éprouvette 1 de caractérisation selon un mode de réalisation particulier de l'invention est dans un matériau que l'on souhaite caractériser.

Par exemple le matériau est un matériau composite. Par exemple, ledit matériau composite est isotrope ou anisotrope. Par exemple, ledit matériau composite est isotrope transverse ou isotrope orthotrope.

Le matériau est par exemple un composite intégrant des fibres continues. De préférence, les fibres sont toutes orientées parallèlement les unes aux autres dans le matériau brut soit avant que l'éprouvette 1 ne soit formée. L'éprouvette 1 s'étend par ailleurs axialement selon un premier axe X.

L'éprouvette 1 présente une section transversale 2 (soit une section s'étendant dans un plan de normale le premier axe X) qui est de forme oblongue.

Plus précisément, la section transversale 2 présente un contour externe 3 oblong. Le contour externe 3 présente ainsi une ligne supérieure 3a parallèle à une ligne inférieure 3b, les deux lignes 3a, 3b étant reliées à chacune de leur extrémité par une portion 3c en arc de cercle et par exemple par un portion 3c en demi-arc de cercle. Le contour externe 3 est fermé.

La section transversale 2 est par ailleurs creuse. Elle présente ainsi une ouverture 4 dessinant un contour interne 5 de la section transversale 2. L'ouverture 4 est elle-même de forme oblongue. Le contour interne 5 présente ainsi une ligne supérieure 5a parallèle à une ligne inférieure 5b, les deux lignes 5a, 5b étant reliées à chacune de leur extrémité par une portion 5c en arc de cercle et par exemple par un portion 5c en demi-arc de cercle. Le contour interne 5 est fermé.

L'orifice 4 est de préférence centré dans la section transversale 2. De la sorte, les portions courbées 3c du contour externe 3 et les portions courbées 5c du contour interne 5 sont concentriques deux à deux.

L'épaisseur e (soit la distance séparant le contour externe 3 du contour interne 5) de la section transversale 2 est de préférence la même sur toute la circonférence de la section transversale 2.

La section transversale 2 de l'éprouvette 1 est de préférence identique sur toute la largeur de l'éprouvette 1 (profondeur considérée selon le premier axe X).

Dès lors, l'éprouvette 1 est creuse et son ouverture 4 s'étend sur toute la largeur de l'éprouvette 1 afin d'être débouchant sur une première face latérale 6 de l'éprouvette 1 et sur une deuxième face latérale 7 de l'éprouvette 1. Les deux faces 6, 7 sont opposées l'une à l'autre. Les deux faces 6, 7 sont ici planes et parallèles entre elles. Chacune desdites faces 6, 7 est donc identique à la section transversale 2 préalablement décrite.

Par ailleurs, les deux faces latérales 6, 7 sont reliées intérieurement par une face interne continue 8 (formant le contour interne 5 des différentes sections transversales de l'éprouvette 1). Par ailleurs, les deux faces latérales 6, 7 sont reliées extérieurement par une face externe continue 9 (formant le contour externe 3 des différentes sections transversales de l'éprouvette 1).

L'éprouvette 1 ainsi décrite comporte donc un longeron supérieur 10 s'étendant longitudinalement selon un deuxième axe Y orthogonal au premier axe X et un longeron inférieur 11 s'étendant longitudinalement selon le deuxième axe Y, parallèlement au premier axe X. L'éprouvette 1 comporte par ailleurs un premier coude 12 courbe (ou partie coudée 12) reliant des premières extrémités longitudinales des longerons inférieur 11 et supérieur 10 et un deuxième coude 13 courbe (ou partie coudée 13) reliant des deuxièmes extrémités longitudinales des longerons inférieur 11 et supérieur 10. L'éprouvette 1 est de préférence d'une seule pièce.

Les fibres du matériau composite suivent ainsi la géométrie de l'éprouvette 1. En particulier, au niveau des longerons inférieur 11 et supérieur 10, les fibres s'étendent de préférence parallèlement au deuxième axe Y. En particulier, au niveau des parties coudées 12 et 13 les fibres s'étendent de sorte à suivre la courbure desdites parties courbées.

Dès lors, l'éprouvette 1 est de forme oblongue en ce sens qu'elle est plus longue (selon le deuxième axe Y) que haute (selon un troisième axe Z orthogonal au premier axe X et au deuxième axe Y) et qu'elle présente deux extrémités longitudinales arrondies reliées entre elles supérieurement par le longeron supérieur 10 et inférieurement par le longeron inférieur 11.

L'éprouvette 1 forme ainsi un anneau (de section oblongue) fermé.

L'éprouvette 1 ainsi décrite est symétrique selon au moins un axe de symétrie et de préférence selon au moins deux axes de symétries. L'éprouvette 1 ainsi décrite est par exemple symétrique selon le deuxième axe Y. L'éprouvette ainsi décrite est par exemple symétrique selon le troisième axe Z.

Ainsi lorsque l'éprouvette 1 repose sur une surface plane :
- ses deux longerons s'étendent horizontalement, et/ou
- son deuxième axe Y s'étend horizontalement, et/ou
- son troisième axe Z s'étend verticalement.

Selon un autre aspect, l'épaisseur de l'éprouvette 1 (soit la distance séparant la face interne continue 8 de la face externe continue 9) est la même sur toute la circonférence de l'éprouvette 1.

L'éprouvette 1 est de préférence une éprouvette 1 épaisse. En effet, son épaisseur 1 n'est pas négligeable vis-à-vis des autres dimensions de l'éprouvette 1 contrairement à des éprouvettes « minces » de l'art antérieur.

Une éprouvette épaisse est par exemple une éprouvette qui n'est pas mince. Une éprouvette mince est par exemple définie par la théorie des plaques minces développée par Love-Kirchhoff.

L'épaisseur 1 est par exemple identique à plus ou moins 30% à la largeur (considérée selon le premier axe X) de l'éprouvette 1 et est par exemple identique à plus ou moins 20% à la largeur de l'éprouvette 1 et est par exemple identique à plus ou moins 10% à la largeur de l'éprouvette 1.

L'épaisseur de l'éprouvette 1 est de préférence supérieure à 5 millimètres, et de préférence supérieure à 8 millimètres et de préférence supérieure à 10 millimètres.

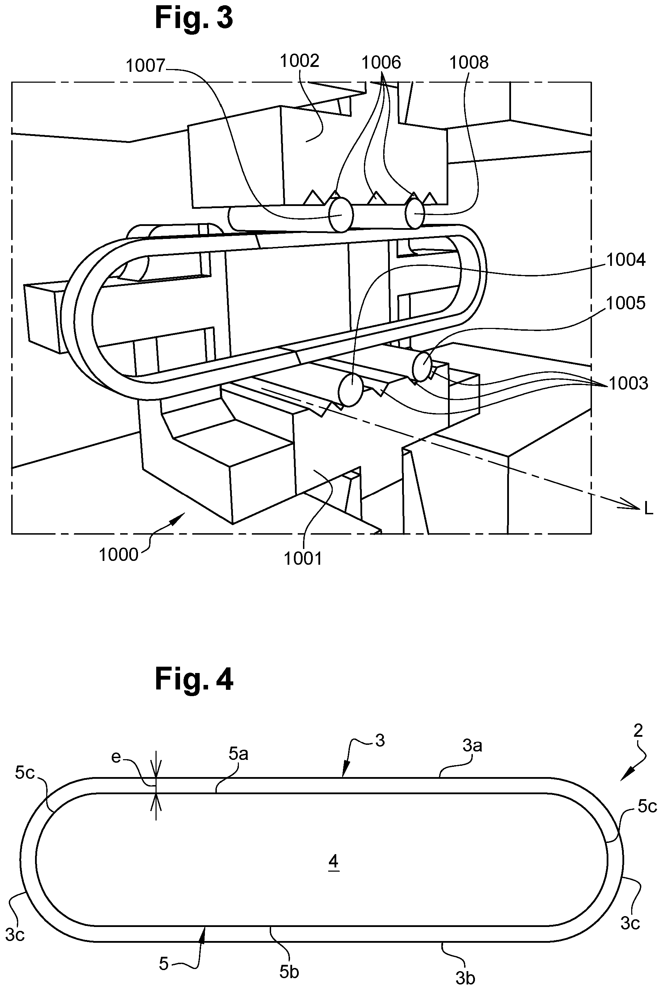

En référence aux figures 3 et 4, on va à présent s'attacher à décrire un procédé de caractérisation du matériau formant une telle éprouvette 1.

Par exemple on souhaite caractériser le matériau par au moins une constante d'élasticité indépendante et de préférence au moins deux constantes d'élasticité indépendantes et de préférence au moins trois constantes d'élasticité indépendantes d'un tel matériau et de préférence au moins quatre constantes d'élasticité indépendantes d'un tel matériau et de préférence au moins cinq constantes d'élasticité indépendantes d'un tel matériau.

Par exemple, on cherche à caractériser le matériau par au moins cinq constantes d'élasticité indépendantes telles que les constantes suivantes : E1, E2, G12, v12 et v23. Au cours d'une étape initiale, une modélisation par éléments finis de l'éprouvette 1 est réalisée.

La modélisation est par exemple formée d'un maillage en mailles tétraédriques. Un diamètre d'une maille (soit la plus grande dimension d'une maille) est de préférence compris entre 0.1 et 0.2 millimètre.

La modélisation a de préférence la même forme que l'éprouvette 1.

La modélisation a de préférence les mêmes dimensions que l'éprouvette 1.

La modélisation va permettre la mise en oeuvre d'une simulation numérique visant à reproduire un essai mécanique qui va être réalisée sur l'éprouvette 1. Ainsi, la modélisation doit être au plus proche de l'éprouvette 1.

La modélisation est également définie par une loi de comportement élastique isotrope-transverse afin de pouvoir se comporter comme l'éprouvette. La modélisation a donc cinq constantes élastique indépendantes : E1, E2, G12, v12 et v23. Dans cette étape initiale, on définit 100 des valeurs arbitraires pour ces constantes d'élasticité indépendantes et/ou des domaines de recherche pour lesdites constantes (un domaine de recherche étant un intervalle présentant une borne maximale et une borne minimale, la constante d'élasticité indépendante correspondante devant impérativement demeurer dans cet intervalle).

La modélisation est également définie pour symboliser le fait que ses fibres suivent le contour de la modélisation. La modélisation est ainsi conformée et/ou se comporte comme l'éprouvette 1 telle que précédemment décrite.

Au cours de l'étape initiale, on définit 200 de préférence une ou des conditions limites pour la suite du procédé. La modélisation et l'éprouvette 1 partagent de préférence au moins une condition limite et de préférence toutes les conditions limites.

On impose ainsi à la simulation (respectivement la modélisation) d'avoir les mêmes caractéristiques que l'essai mécanique (respectivement l'éprouvette 1).

Par exemple la ou les conditions limites sont choisies dans la liste ci-dessous :
- un ou des plans de symétrie de la modélisation et de l'éprouvette,
- un ou des plans de symétrie des efforts appliqués à la modélisation et à l'éprouvette,
- une ou des caractéristiques d'au moins un effort appliqué à la modélisation et à l'éprouvette (valeur, direction, ...),
- une ou des caractéristiques d'un contact entre la modélisation et l'éprouvette et au moins un arbre par l'intermédiaire duquel un effort est appliqué sur ladite modélisation et ladite éprouvette,
- etc.

Lors d'une première étape du procédé, une boucle itérative 300 est mise en oeuvre.

Cette boucle itérative 300 comporte une première phase consistant à réaliser 400 un essai mécanique sur au moins une éprouvette telle que celle précédemment décrite, une deuxième phase consistant à réaliser 500 une simulation numérique sur la modélisation précédemment décrite et une troisième phase de comparaison 600 des résultats obtenus lors de la première phase et la deuxième phase de cette première étape.

### Première phase

De préférence, l'essai mécanique est un essai de flexion. De préférence, l'essai mécanique est un essai de flexion quatre points.

De préférence, l'essai mécanique est un essai de flexion quatre points selon un axe parallèle au troisième axe Z (soit un axe vertical lorsque l'éprouvette 1 est agencée sur un banc d'essai 1000).

Dans le cas présent, le banc d'essai 1000 comporte une platine inférieure 1001 et une platine supérieure 1002. La platine inférieure comporte une mâchoire inférieure présentant une pluralité de rainures 1003 (dont une partie seulement est référencée ici). Les différentes rainures s'étendent parallèlement entre elles et à un axe longitudinal L. L'axe L est parallèle au premier axe X lorsque l'éprouvette 1 est en place dans le banc d'essai 1000.

La platine inférieure 1001 comporte par ailleurs un premier arbre 1004 et un deuxième arbre 1005. Les deux arbres 1004, 1005 sont identiques entre eux. Les deux arbres 1004, 1005 sont conformés en cylindre de révolution plein. La section transversale de chacun des arbres 1004, 1005 est un disque. Chaque arbre 1004, 1005 est apte à être reçu temporairement dans l'une des rainures 1003.

De la sorte, chaque arbre 1004, 1005 s'étend longitudinalement dans l'une des rainures 1003, les différents arbres 1004, 1005 s'étendant parallèlement entre eux et à l'axe L. Les arbres 1004, 1005 peuvent donc être plus ou moins éloignés l'un de l'autre selon les rainures dans lesquelles ils sont reçus.

Par ailleurs, la platine supérieure 1002 comporte une mâchoire supérieure présentant une pluralité de rainures 1006 (dont une partie seulement est référencée ici). Les différentes rainures 1006 s'étendent parallèlement entre elles et à l'axe longitudinal L.

La platine supérieure 1002 comporte par ailleurs un premier arbre 1007 et un deuxième arbre 1008. Les deux arbres 1007, 1008 sont identiques entre eux. Les deux arbres 1007, 1008 sont conformés en cylindre de révolution plein. La section transversale de chacun des arbres 1007, 1008 est un disque. De préférence, les arbres 1007, 1008 de la platine supérieure 1002 sont identiques aux arbres 1004, 1005 de la platine inférieure 1001.

Chaque arbre 1007, 1008 est apte à être reçu temporairement dans l'une des rainures de la mâchoire.

De la sorte, chaque arbre 1007, 1008 s'étend longitudinalement dans l'une des rainures 1006 parallèlement entre eux et à l'axe L. Les arbres 1007, 1008 peuvent donc être plus ou moins éloignés l'un de l'autre selon les rainures 1006 dans lesquelles ils sont reçus.

Les arbres 1007, 1008 sont positionnés en même temps que l'éprouvette 1 sur le banc d'essai.

Optionnellement, les deux platines 1001, 1002 sont identiques entre elles.

La platine supérieure 1002 est agencée au-dessus de la platine inférieure 1001 de sorte que les mâchoires inférieure et supérieure soient en vis-à-vis l'une de l'autre. Le reste du banc d'essai 1000 est similaire à ce qui existe actuellement et ne sera pas détaillé davantage ici.

On note que les arbres 1004, 1005, 1007, 1008 des platines inférieure 1001 et supérieure 1002 présentent une longueur (selon l'axe L) supérieure à la largeur (selon l'axe X) de l'éprouvette.

En service, un opérateur vient agencer l'éprouvette 1 sur la platine inférieure 1001. Les deux arbres 1004, 1005 de la platine inférieure forment ainsi deux « points » d'appui sur lesquels repose dans le cas présent le longeron inférieur 11.

L'opérateur commande alors le banc d'essai 1000 pour que la platine supérieure 1002 vienne appuyer sur l'éprouvette 1 par ses deux arbres 1007, 1008 et ainsi déformer en flexion l'éprouvette 1. Les deux arbres 1007, 1008 de la platine supérieure 1002 forment donc deux « points » sur le longeron supérieur 10.

Ainsi les platines inférieure 1001 et supérieure 1002 encadrent l'éprouvette 1 et permettent sa déformation en flexion.

Bien qu'on parle de points d'appui et de points de pression, on comprend que les contacts entre l'éprouvette 1 et les différents arbres 1004, 1005, 1007, 1008 sont en réalité des zones de contact et de pression linéaires ou surfaciques.

De préférence, les arbres 1004, 1005 de la platine inférieure 1001 sont agencés de part et d'autre d'un axe de symétrie central vertical séparant l'éprouvette 1 en deux et/ou les arbres 1006, 1007 de la platine supérieure 1002 sont agencés de part et d'autre dudit axe de symétrie central vertical. On comprend ainsi que les arbres 1004, 1005 de la platine inférieure 1001 appuient de manière symétrique sur le longeron inférieur 11 et/ou que les arbres 1007, 1008 de la platine supérieure 1002 appuient de manière symétrique sur le longeron supérieur 10.

De préférence, les arbres 1004, 1005 de la platine inférieure 1001 sont plus proches du centre du longeron inférieur 11 que de ses extrémités longitudinales et/ou les arbres 1007, 1008 de la platine supérieure 1002 sont plus proches du centre du longeron supérieur 10 que de ses extrémités longitudinales. On comprend ainsi que les arbres 1004, 1005 de la platine inférieure 1001 appuient sur le centre du longeron inférieur 11 et/ou que les arbres 1007, 1008 de la platine supérieure 1002 appuient sur le centre du longeron supérieur 10.

De préférence, les arbres 1004, 1005 de la platine inférieure 1001 sont alignés selon une direction parallèle au deuxième axe Y (et/ou parallèle à l'horizontal). De préférence, les arbres 1007, 1008 de la platine supérieure 1002 sont alignés selon une direction parallèle au deuxième axe Y (et/ou parallèle à l'horizontal).

Préférentiellement, un premier arbre 1004 de la platine inférieure 1001 et un premier arbre 1007 de la platine supérieure 1002 sont également alignés entre eux selon une direction parallèle au troisième axe Z (et/ou parallèle à la verticale). De préférence, un deuxième arbre 1005 de la platine inférieure 1001 et un deuxième arbre 1008 de la platine supérieure 1002 sont également alignés entre eux selon une direction parallèle au troisième axe Z (et/ou parallèle à la verticale).

Ainsi, chaque point d'appui est aligné à l'un des points de pression.

A l'issue de la première phase on obtient 700 un ou des paramètres caractéristiques de l'essai mécanique réalisé, dits « paramètres mesurés ». Par exemple entre 6 et 20 paramètres sont mesurés au cours de cette première phase et par exemple entre 10 et 15 paramètres et par exemple 12 paramètres. L'estimation de ces paramètres permet de pouvoir en déduire des contraintes élastiques indépendantes mesurées (E1, E2, G12, v12 et v23).

Les paramètres mesurés sont par exemple des déformations unitaires ε (soit des déformations par unité de longueur, les déformations unitaires n'ayant pas d'unité [m/m]). Les paramètres mesurés sont par exemple choisis de sorte à présenter une ou plusieurs des caractéristiques ci-dessous :
- une déformation unitaire longitudinale, une déformation unitaire transverse, une déformation unitaire en cisaillement, etc.
- déformation unitaire à niveau de la face externe continue 9 de l'éprouvette 1, déformation unitaire à niveau de la face interne continue 8 de l'éprouvette 1, etc.
- déformation unitaire à niveau du longeron supérieur 10, du longeron inférieur 11, des extrémités longitudinales, etc.
- déformation unitaire orientée selon un axe parallèle à l'un des axes X, Y ou Z ou bien déformation unitaire orientée selon un axe incliné vis-à-vis de l'un desdits axes X, Y et Z.

Par exemple, au moins un des paramètres est une déformation unitaire mesurée dans l'une des parties coudées 12, 13 de l'éprouvette 1. De préférence, ledit paramètre est une déformation unitaire à niveau du centre de ladite partie coudée et/ou orientée selon une direction radiale à ladite partie coudée.

Par exemple, au moins un des paramètres est une déformation unitaire mesurée dans l'un des longerons de l'éprouvette 1. De préférence, ledit paramètre est une déformation unitaire à niveau du centre du longeron et/ou orientée parallèlement audit longeron et/ou orientée transversalement audit longeron.

Pour mesurer ces paramètres lors de l'essai mécanique, une ou plusieurs jauges de déformation sont agencées sur l'éprouvette 1. L'orientation et la position de chacune des jauges sur l'éprouvette 1 dépend du paramètre que l'on souhaite mesurer. Ainsi si la jauge de déformation permet de mesurer un paramètre de déformation unitaire dans une zone Z de l'éprouvette et selon une orientation D donnée, la jauge de déformation sera de manière correspondante de préférence agencée dans la zone Z de l'éprouvette 1 et selon l'orientation D visée. On note qu'une même jauge de déformation peut permettre la mesure de deux paramètres distincts par exemple si elle est mono-latérale et non bilatérale.

### Deuxième phase

La deuxième phase est réalisée simultanément ou en décalé avec la première phase.

Au cours de cette deuxième phase, on applique à la modélisation le même type d'essai que l'essai mécanique appliqué à l'éprouvette 1. On reproduit ainsi un essai de flexion quatre points selon un axe parallèle au troisième axe Z sur la modélisation. En particulier, les points d'appui et les points de pression sont appliqués aux mêmes zones de la modélisation que pour l'éprouvette 1. De préférence, on suppose que le contact entre chaque points de pression et la modélisation est glissant (les frottements étant négligés) .

De même, les paramètres calculés le sont au même endroit et avec la même direction que les paramètres mesurés lors de la première phase.

A l'issue de la simulation, on obtient ainsi des paramètres calculés (ou numériques) qui sont les mêmes que les paramètres mesurés au cours de la première phase, les valeurs des paramètres calculés étant cependant potentiellement différentes des valeurs des paramètres mesurés au cours de la première phase.

### Troisième phase

Au cours d'une troisième phase, les paramètres mesurés et les paramètres calculés sont comparés.

Si la comparaison entre au moins l'un des paramètres mesurés et le paramètre calculé correspondant ne répond pas positivement à un critère de convergence (par exemple si la différence entre l'un des paramètres mesurés et le paramètre calculé correspondant est supérieur à un seuil de convergence), alors au moins la deuxième phase est réitérée une nouvelle fois.

Au moins les valeurs des paramètres mesurés et des paramètres calculés sont fournis en entrée de la nouvelle deuxième phase 900 .

A l'issue de la nouvelle deuxième phase, une troisième nouvelle phase est implémentée.

La boucle itérative 300 continue ainsi tant que la comparaison entre au moins l'un des paramètres mesurés et le paramètre calculé correspondant ne répond pas positivement au critère de convergence.

Au cours d'une quatrième étape, si la comparaison entre les paramètres mesurés et les paramètres calculés correspondants répond positivement au critère de convergence, alors la boucle itérative 300 est terminée.

La boucle itérative 300 d'optimisation ainsi décrite peut-être mise en oeuvre par exemple par un algorithme génétique multi-objectifs (ou « Multi-Objective Genetic Algorithm ») ou bien encore un algorithme adaptatif multi-objectifs (ou « Adaptive Multiple-Objective Optimization »).

On comprend donc que la première étape du procédé mixe deux approches différentes :
- une première approche qui est une méthode de réalisation d'essais mécanique ;
- une deuxième approche qui est une méthode inverse et par exemple une méthode de recalage par éléments finis. Plus précisément, le procédé consiste au moins en partie en la comparaison et la variation des conditions d'entrée de la modélisation de manière itérative pour que les paramètres de sortie de cette modélisation correspondent à des données expérimentales obtenues avec un ou plusieurs essais mécaniques.

On note par ailleurs, que le ou les essais mécaniques de la première phase et le calcul numérique de la deuxième phase partagent les mêmes conditions limites imposées.

Au cours de la quatrième étape, les constantes élastiques indépendantes E1, E2, G12, v12 et v23 sont identifiées à partir des paramètres calculés et des paramètres mesurés.. Cette identification est réalisée par une méthode d'optimisation (comme une de celles proposées précédemment) permet de déterminer les meilleurs valeurs possibles pour ces constantes élastiques indépendantes E1, E2, G12, v12 et v23 au vu des paramètres calculés et des paramètres mesurés qui ont permis de valider le critère de convergence.

Lors de la première itération de la boucle 300, le critère de convergence a par exemple une valeur prédéterminée. De préférence, le critère de convergence n'est pas fixe et va ici évoluer en fonction des valeurs des paramètres mesurés à chaque nouvelle itération de la boucle 300.

De préférence, les paramètres mesurés sont également utilisés dans le calcul du critère de convergence. La valeur des paramètres mesurés est toutefois ici fixe entre au moins deux itérations successives. De la sorte, la variation du critère de convergence dépend principalement des paramètres calculés.

De manière avantageuse grâce à l'identification de ces cinq constantes élastiques, il est également possible de calculer une sixième constante d'élasticité indépendante à partir desdites cinq constantes élastiques identifiées. Par exemple la sixième constante est la constante élastique indépendante G23.

La procédé ainsi décrit permet une caractérisation mécanique intrinsèque d'un matériau. En particulier, le procédé ainsi décrit permet une caractérisation mécanique intrinsèque d'un matériau d'éprouvettes massives.

Le procédé permet notamment de caractériser un matériau par cinq à six constantes d'élasticité indépendantes. De manière avantageuse, plusieurs constantes d'élasticité indépendantes sont déterminées en ayant recours à un seul type d'essai mécanique et de simulation correspondante (soit ici la flexion quatre points).

La caractérisation est ainsi de bonnes qualité.

Bien entendu, l'invention n'est pas limitée au mode de réalisation décrit mais englobe toute variante entrant dans le champ de l'invention telle que définie par les revendications.

Bien qu'ici les jauges de contraintes soient agencées sur tout le pourtour de l'éprouvette lors de l'essai mécanique, les jauges de contraintes ne pourront être agencées que sur une partie seulement de ce pourtour. En particulier, les jauges de contraintes pourront n'être agencées que sur la moitié de l'éprouvette, ladite moitié étant le symétrique de l'autre moitié de l'éprouvette selon au moins un axe de symétrie. En particulier, les jauges de contraintes pourront n'être agencées que sur le quart de l'éprouvette, ledit quart étant le symétrique des trois autres quarts de l'éprouvette selon deux axes de symétrie distincts. En effet, du fait de la symétrie de l'éprouvette, le ou les paramètres obtenus lors de l'essai mécanique pour une partie de l'éprouvette sont transposables par symétrie à l'autre partie de l'éprouvette.

De même, bien qu'ici les calculs effectués via la modélisation soient réalisés sur tout le pourtour de de la modélisation les calculs pourront être réalisés pour une partie seulement de ce pourtour. En particulier, les calculs pourront n'être réalisés que sur la moitié de la modélisation, ladite moitié étant le symétrique de l'autre moitié de ma modélisation selon au moins un axe de symétrie. En particulier, les calculs pourront n'être réalisés que sur le quart de la modélisation, ledit quart étant le symétrique des trois autres quarts de la modélisation selon deux axes de symétrie distincts. En effet, du fait de la symétrie de la modélisation, le ou les paramètres obtenus lors du calcul sont transposables par symétrie à l'autre partie de la modélisation

Si plusieurs premières phases sont réalisées, l'éprouvette utilisée lors d'une première phase n pourra être identique à une éprouvette utilisée lors d'une première phase n+1 ou pourra être différente. Dans ce dernier cas, la forme de l'éprouvette n+1 sera identique à la forme de l'éprouvette n mais ses dimensions varieront. Dans ce dernier cas, on veillera de préférence à adapter la modélisation en conséquence afin que la modélisation n soit de préférence identique à l'éprouvette n et que la modélisation n+1 soit de préférence identique à l'éprouvette n+1.

Bien qu'ici les constantes élastiques indépendantes déterminées soient les constantes E1, E2, G12, v12, v23 et G23, d'autres constantes élastiques indépendantes pourront être déterminées et de préférence les constantes associées aux modèles isotropes, orthotropes ou anisotropes.

L'éprouvette pourra être fabriquée par méthode additive, par l'intermédiaire d'un ou de plusieurs torons de fils préimprégnés qui seront ensuite chauffés pour être solidarisés de manière définitive ensemble, par l'intermédiaire d'un ou de plus torons de fils qui seront ensuite soudés ensemble ...

Bien qu'ici on mesure les paramètres via des jauges de déformation, au moins un paramètre pourra être mesuré d'une autre façon par exemple par un capteur de position, par un capteur optique (comme par exemple une caméra, le traitement des images permettant de détecter par exemple une déformation unitaire) ... On pourra ainsi obtenir d'autres paramètres que des paramètres de déformations unitaires tels qu'au moins une valeur d'allongement, au moins une valeur de déplacement des mâchoires, ...

En cas de présence de jauges de déformations, celles-ci pourront être posées sur n'importe quelle face de l'éprouvette (contour interne, contour externe, première face latérale ou deuxième face latérale) et/ou sur n'importe quelle zone de l'éprouvette (longeron supérieur, longeron inférieur, extrémités longitudinales courbes) et/ou dans n'importe quelle direction. Les jauges de déformation pourront par ailleurs être unidirectionnelles et/ou bidirectionnelles et/ou tri directionnelles.

Bien qu'ici l'essai mécanique soit un essai de flexion quatre points, d'autres types d'essais mécaniques pourront être envisagés selon le ou les constantes d'élasticité indépendante que l'on souhaite obtenir. De préférence, dans tous les cas, un unique type d'essai mécanique est utilisé pour caractériser le matériau utilisé.

Bien qu'ici le matériau à caractériser soit un matériau composite, le matériau à caractériser pourra être un autre type de matériau comme par exemple un matériau métallique. De même bien qu'ici l'éprouvette (et la modélisation associée) soit épaisse, l'éprouvette (et la modélisation associée) pourra être mince.

Bien qu'ici la modélisation soit formée d'un maillage en mailles tétraédriques, une ou plusieurs autres formes de mailles pourra être employée. Bien qu'ici un diamètre d'une maille (soit la plus grande dimension d'une maille) soit compris entre 0.1 et 0.2 millimètre, le diamètre pourra être plus grand ou plus petit que cet intervalle.

Bien qu'ici on applique le même critère de convergence à tous les paramètres, on pourra appliquer des critères de convergence différents pour au moins deux desdits paramètres.

Bien qu'ici on valide tous les paramètres d'un coup, on pourra valider les paramètres au fur et à mesure. Ainsi, si la comparaison entre l'un des paramètres mesurés et l'un des paramètres calculés correspondant répond au critère de convergence, on pourra valider ce paramètre. Pour les autres paramètres, il sera alors nécessaire d'effectuer de nouveau une deuxième phase néanmoins lors de cette nouvelle deuxième phase, le paramètre déjà validé ne sera pas de nouveau calculé. Sa valeur sera considérée comme définitive ce qui permettra de limiter le temps de calcul de cette nouvelle itération.

Bien qu'ici on effectue une seule première phase d'essai mécanique, on pourra effectuer plusieurs fois la première phase. Les différentes valeurs des paramètres mesurés pourront ainsi être moyennées pour former des paramètres mesurés moyennés qui seront utilisés pour les comparaisons avec les paramètres calculés. En variante ou en complément, pour les comparaisons avec les paramètres calculés, on pourra également s'appuyer sur au moins une valeur d'écart-type associé aux différentes mesures d'un même paramètre.

En variante ou en complément, à chaque nouvelle itération de la deuxième phase de calcul, une itération de la première phase de mesure pourra être également implémentée. De manière avantageuse, dans tous les cas, le nombre d'essais mécaniques sera bien moins important que dans les cas d'essais normalisés de l'art antérieur.

Bien qu'ici la boucle itérative s'arrête lorsque le critère de convergence est respecté, le procédé pourra s'arrêter autrement par exemple lorsqu'un nombre d'itérations maximal a été atteint.

Bien qu'ici les conditions limites ne soient pas modifiées entre deux premières phases successives et deux deuxièmes phases successives, les conditions limites pourront être modifiées entre deux premières phases successives et/ou deux deuxièmes phase successives.

Bien qu'ici les arbres ne soient pas fixés au banc d'essai mais reposent seulement par gravité sur la platine inférieur (pour les arbres inférieurs) ou sur l'éprouvette directement (pour les arbres supérieurs), les arbres pourront être fixés au banc d'essai de manière temporaire (par exemple par attraction magnétique, par fixation de type vis-écrou, ...) .

## Revendications

1. Eprouvette de caractérisation, **caractérisé en ce que** l'éprouvette est conformée extérieurement en une forme oblongue et est creusée intérieurement par un orifice (4) de forme oblongue.

2. Eprouvette selon la revendication 1, dans laquelle l'orifice (4) est transversant et s'étend selon une direction axiale (X), l'éprouvette étant conformé en un anneau oblong fermé.

3. Eprouvette selon la revendication 1 ou la revendication 2, dans laquelle une épaisseur de l'éprouvette est constante sur tout le tour de l'éprouvette.

4. Eprouvette selon l'une des revendications précédentes, dans laquelle l'éprouvette est symétrique selon au moins un axe de symétrie.

5. Eprouvette selon l'une des revendications précédentes, dans laquelle l'éprouvette a une épaisseur supérieure à 5 millimètres.

6. Eprouvette selon l'une des revendications précédentes, dans laquelle l'étiquette est en matériau composite.

7. Procédé d'essai mécanique sur une éprouvette selon l'une des revendications précédentes, dans lequel l'éprouvette est soumise à un essai de flexion quatre points.

8. Procédé selon la revendication 7, dans lequel quatre arbres viennent en contact avec l'éprouvette pendant l'essai, l'éprouvette reposant sur deux premiers arbres (1004, 1005) par une face inférieure de l'éprouvette et deux deuxièmes arbres (1007, 1008) venant appuyer sur une face supérieure de l'éprouvette.

9. Procédé selon la revendication 8, dans lequel chaque arbre appuyant sur la face supérieure de l'éprouvette est aligné avec l'un des arbres appuyant sur la face inférieure de l'éprouvette.

10. Procédé selon l'une des revendications 8 à 9, dans lequel un milieu de la face inférieure de l'éprouvette repose sur les deux premiers arbres (1004, 1005) et dans lequel les deux deuxièmes arbres (1007, 1008) appuient sur une face supérieure de l'éprouvette.
